# EUROPEAN PATENT APPLICATION

(11) **EP 4 579 497 A1**
(43) Date of publication of application: **02.07.2025**
(21) Application number: 23307392.3
(22) Date of filing: 26.12.2023
(51) Int. Cl.: G06F 21/32, H04L 9/32, H04L 9/40, H04W 12/06

(54) **TIME EFFICIENT BORDER CROSSING**

(71) Applicant: HID Global CID SAS, 92150 Suresnes Cedex (FR)
(72) Inventor: JOGAND-COULOMB, Fabrice, 13090 Aix en Provence (FR)
(74) Representative: Kramer Barske Schmidtchen Patentanwälte PartG mbB

(57) **Abstract**

Techniques for identity document authentication and user verification using pre-sent information over the internet are described. A user, before reaching a checkpoint, can transmit identity document information to a verifier system over the internet using a mobile device. The verifier system can authenticate the identity document information and register as an authentication factor the mobile device that sent the identity document. The verifier system can also transmit control data to the mobile device for the mobile device to store for usage as an authentication factor.

## Description

### TECHNICAL FIELD

The present disclosure generally relates to using mobile devices for authentication and verification.

### BACKGROUND

Identity documents, such as a passport, driver license, etc., are typically used to verify the identity of a person crossing a checkpoint, such as a border. An agent at the checkpoint typically authenticates the identity document and then verifies the person is the legitimate owner of the identity document based on a portrait or other identity information. For example, verification of electronic documents can require transfer of digital data, which takes time. Hence, this authentication and verification can be long and cumbersome, leading to long queues at checkpoints.

### SUMMARY

This disclosure describes a method comprising: receiving, from a mobile device, identity document information over a network before a user reaches a checkpoint; receiving, from the mobile device, mobile device information over the network; confirming authenticity of the identity document information; retrieving biometric information associated with the user based on the identity document information; registering the mobile device as an authentication factor; transmitting control data to the mobile device, wherein the mobile device is configured to store the control data; and making the registration record accessible to the checkpoint, wherein the checkpoint is configured to authenticate the mobile device based on the control data and verify identity of the user based on the biometric information.

This disclosure also describes an authentication system including a verifier system communicatively couplable to a mobile device and a checkpoint. The verifier system includes at least one hardware processor; and at least one memory storing instructions that, when executed by the at least one hardware processor, cause the at least one hardware processor to perform operations comprising: receiving, from a mobile device, identity document information over a network before a user reaches a checkpoint; receiving, from the mobile device, mobile device information over the network; confirming authenticity of the identity document information; retrieving biometric information associated with the user based on the identity document information; registering the mobile device as an authentication factor; transmitting control data to the mobile device, wherein the mobile device is configured to store the control data; and making the registration record accessible to the checkpoint, wherein the checkpoint is configured to authenticate the mobile device based on the control data and verify identity of the user based on the biometric information.

This disclosure further describes a machine readable medium embodying instructions that, when executed by a machine, cause the machine to perform operations comprising: receiving, from a mobile device, identity document information over a network before a user reaches a checkpoint; receiving, from the mobile device, mobile device information over the network; confirming authenticity of the identity document information; retrieving biometric information associated with the user based on the identity document information; registering the mobile device as an authentication factor; transmitting control data to the mobile device, wherein the mobile device is configured to store the control data; and making the registration record accessible to the checkpoint, wherein the checkpoint is configured to authenticate the mobile device based on the control data and verify identity of the user based on the biometric information..

### BRIEF DESCRIPTION OF THE DRAWINGS

Various ones of the appended drawings merely illustrate example embodiments of the present disclosure and should not be considered as limiting its scope.
FIG. 1 illustrates example portions of a travel route of a user crossing a border.
FIG. 2 illustrates example portions of an authentication system.
FIG. 3 is a flow diagram for a method for authenticating a user crossing a border with a digital travel document.
FIG. 4 is a flow diagram for a method for authenticating a user crossing a border with a token-based travel document.
FIG. 5 is a flow diagram for a method for authenticating a user crossing a border with a physical identity document.
FIG. 6 illustrates example portions of a checkpoint system.
FIG. 7 illustrates a block diagram schematic of various example components of an example machine that can be used as, for example, a verifier system and checkpoint system.

### DETAILED DESCRIPTION

Techniques for identity document authentication and user verification using pre-sent information over the internet are described. A user, before reaching a checkpoint, can transmit identity document information to a verifier system over the internet using a mobile device. The verifier system can authenticate the identity document information and register as an authentication factor the mobile device that sent the identity document. The verifier system can also transmit control data to the mobile device for the mobile device to store for usage as an authentication factor. The verifier system can load biometric information associated with the user and the control data associated with the mobile device into the checkpoint. When the user approaches the checkpoint, the checkpoint can authenticate the mobile device as a valid authentication factor based on the control data, and verify the user based on a comparison of a biometric reading performed at the checkpoint and the stored biometric information. Therefore, processing at the checkpoint can be performed more efficiently and accurately. The identity document can be validated before the user reaches the checkpoint, and the checkpoint authenticates the registered mobile device and verifies the identity of the user based on biometric information.

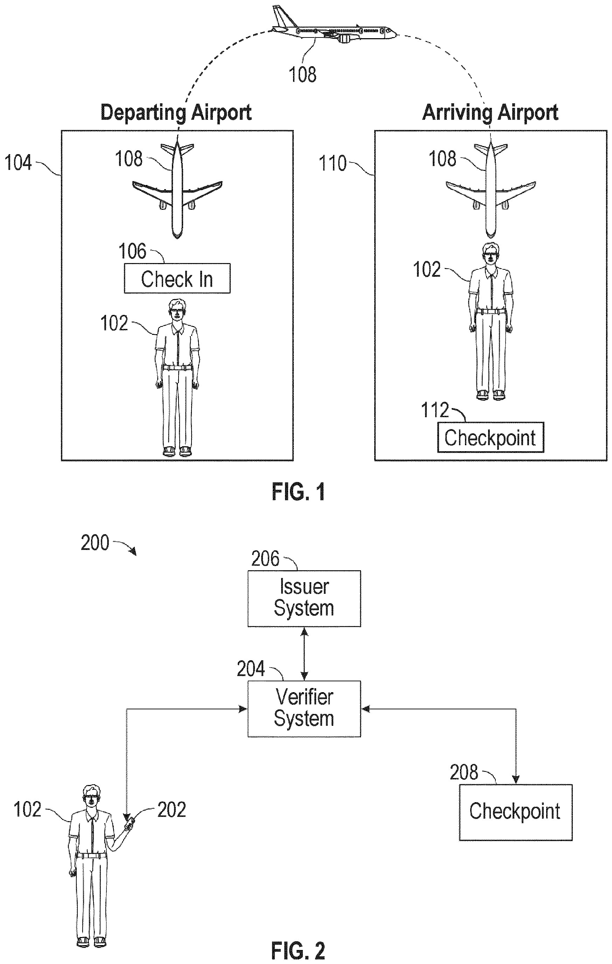

FIG. 1 illustrates example portions of a travel route of a user crossing a border. Other travel routes, including by car, train, boat, foot, etc., can also be used. Also, the authentication and verification techniques described herein can be used in other applications, such as access to secure premises, and is not limited to, for example, geographic border crossing.

In the example shown in FIG. 1, a user 102 enters a departing airport 104 and checks into a flight at a check in point 106. The user 102 boards airplane 108, which departs the departing airport 104 and crosses a border, such as a country border, arriving at an arriving airport 110. The user 102 deboards the airplane 108 and reaches a border checkpoint 112. In some examples, an additional checkpoint may be provided in the departing country, e.g., departing airport 104.

Typically, the user 102 presents an identity document, such as a passport, driver license, or the like, at the border checkpoint 112. The identity document is verified at the checkpoint 112. The identity document can contain biometric information related to the user, such as a portrait, fingerprint, or the like. The identity of the user 102 may be matched based on the biometric information to verify that the user 102 is the legitimate owner of the identity document. This process at the checkpoint 112 can be long and cumbersome, leading to long queues. Also, this process can be susceptible to security issues since all verification is performed at the checkpoint 112.

The authentication and verification techniques described herein can be used to improve the processing speed at checkpoints. The techniques can also improve security protocols by distributing the authentication process.

FIG. 2 illustrates example portions of an authentication system 200. The authentication system 200 includes a mobile device 202 associated with a user 102. The mobile device 202 may be provided as a cell phone, smart watch, tablet, laptop, or the like. The mobile device 202 may be configured to communicate with a verifier system 204 over the internet using one or more networks.

The mobile device 202 may include a storage or memory device storing identity document information related to the user 102. In some examples, the identity document information includes digital travel documents, such as a mobile passport (e.g., ePassport), driver license, or the like. For example, the mobile device 202 may include a mobile wallet application in which a mobile travel document may be stored.

In some examples, the identity document information includes token-based documents. For example, the identity document information includes a token storing pointer information identifying a location (e.g., URL) from where relevant information already received from the identity document can be retrieved and/or a verification status. The token may be encrypted.

In some examples, the identity document information includes images of a physical identity document, such as a passport, driver license, or the like. For example, the identity document can include a stored image file of the physical identity document. For example, the mobile device can be equipped with a camera to take a picture of the physical identity document and store (at least temporarily) the picture on the mobile device. For another example, the identity document information may include an electronically generated version of the identity document, for example, obtained or retrieved from the issuer of the identity document.

The mobile device 202 may be communicatively coupled to the verifier system 204. For example, the mobile device 202 may be coupled to the verifier system 204 over the internet via one or more networks. The network may include a wired or wireless local area network (LAN) and a wide area network (WAN), wireless personal area network (PAN), ultra-wideband (UWB) network, Bluetooth (BLE) network, cellular network, or other types of networks. Computers may be connected over the Internet, an Intranet, Extranet, Ethernet, or any other system that provides communications. Example communication networks may include a local area network (LAN), a wide area network (WAN), a packet data network, mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others.

The verifier system 204 may receive the identity document information from the mobile device 202 over the internet. The verifier system 204 may also receive information regarding the mobile device 202. For example, the verifier system 204 may receive information about the manufacturer, model, operating system version, and/or related security applications, etc., regarding the mobile device 202.

The verifier system 204 includes one or more processors and storage devices. The storage devices may store one or more databases used for registration records. The verifier system 204 may perform an entitlement check based on the received mobile device information and identity document information to determine if the owner of the identity document is entitled to cross the respective checkpoint. In some examples, the verifier system 204 may also have access to other travel document information, such as visa information, for performing the entitlement check.

The verifier system 204 may determine whether the mobile device 202 can be used as an authentication factor based on the mobile device information. For example, the verifier system 204 may check the manufacturer, model, operating system version, and/or presence of related security application or features to determine whether the mobile device 202 can be used authentication factor. The verifier system 204 may store a list of requirements for a mobile device to qualify to be used as an authentication factor and may compare the received mobile device information to the stored list of requirements to determine whether the mobile device 202 can be used an authentication factor. The list of requirements can be set by different jurisdictions, such as countries. For example, jurisdiction A may have stricter requirements, such as a first set of requirements, while jurisdiction B may have more lenient requirements, such as a second set of requirements.

The verifier system 204 may also authenticate the identity document for the user 102 based on the received identity document information. The verifier system 204 may determine whether the respective identity document is a valid document (e.g., valid passport compared to a fake passport). The verifier system 204 may be communicatively coupled to an issuer system 206. The issuer system 206 may be associated with the issuing party of the identity document. In some examples, the issuer system 206 may be associated with third parties maintaining digital travel documents. In some examples, the verifier system 204 may retrieve information such as pictures, identity document itself, based on the received identity document information. For example, in the examples where the identity document information includes a token, the verifier system may use the token to retrieve information needed to authenticate the corresponding identity document from the issuer system 206. The token may include a pointer or URL link to where the relevant information is stored.

If the verifier system 204 determines that the mobile device 202 can be used an authentication factor and that the identity document associated with the user 102 is valid, the verifier system 204 registers the mobile device 202 as an authentication factor associated with the user 102. The verifier system 204 may register the mobile device 202 in a database and associate the mobile device 202 with the user 102 based on the identity document information and control data. The verifier system 204 also transmits the control data to the mobile device 202. The control data may be stored on the mobile device 202 and may be used later by checkpoint 208 to authenticate the mobile device 202.

The control data may include information, for example, by border control to authenticate the mobile device 202. In some examples, the control data may include key information to facilitate key based authentication. In some examples, the control data may include a unique code.

The verifier system 204 may transmit the mobile device registration information to the checkpoint 208. The checkpoint 208 may use the registration information to authenticate the mobile device 202 when the user 102 arrives at the checkpoint 208 with the mobile device 202, and the checkpoint 208 may use the registration information to also verify the user 102 based on biometric information. For example, the registration information may include a portrait or fingerprint information of the user 102 retrieved from the identity document. The checkpoint 208 may then collect biometric information from the user 102 (e.g., take a picture or fingerprints) and compare it to the biometric record in the registration information to verify the user 102. Thus, the checkpoint 208 authenticates the mobile device 202 and not the identity document, which was authenticated before the user 102 arrives at the checkpoint 208 by the verifier system 204. The checkpoint 208 still performs a two-factor authentication by authenticating the mobile device 202 and also verifying the identity of the user 102 based on biometric information.

The authentication and verification techniques described herein can accommodate usage of different types of identity documents. Unlike some conventional systems that restrict use of one type of identity document (e.g., physical passport or digital travel document), the techniques described are not limited to one document type but can be used with different types such as digital travel documents, token-based documents, physical documents, and the like, making the authentication and verification techniques described herein more robust and flexible. For example, the verifier system 204 can be equipped to handle different types of travel documents and perform various authentication and verification actions based on the determined type of travel document. In some examples, the verifier system 204 can be equipped to process visa information.

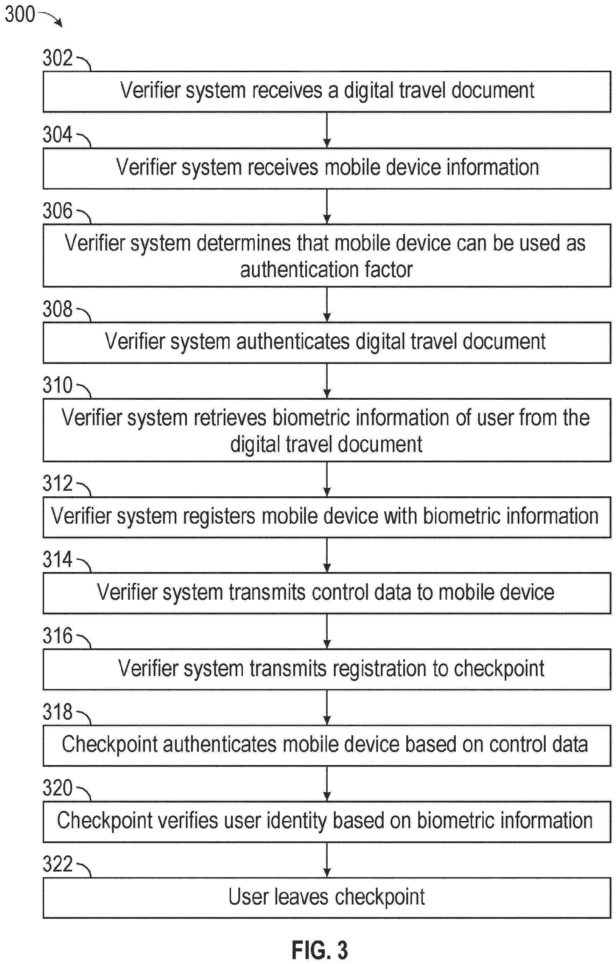

FIG. 3 is a flow diagram for a method 300 for authenticating a user, for example, crossing a border with a digital travel document. In some examples, the method 300 can be executed using components of authentication system 200 described above with reference to FIG. 2. In this example, a user is traveling from country A (e.g., a first jurisdiction) to country B (e.g., a second jurisdiction) with a checkpoint in country B. At operation 302, a verifier system receives a digital travel document (e.g., ePassport) transmitted over the internet from a mobile device before the user reaches the checkpoint in country B. For example, the mobile phone may transmit the digital travel document before or after the user checks in to their flight in country A. In another example, the mobile phone may transmit the digital travel document after the user arrives in country B but before the user reaches the checkpoint.

At operation 304, the verifier system also receives information regarding the mobile device that transmitted the digital travel document. The mobile device information can include information about the manufacturer, model, operating system version, and/or related security applications, etc.

At operation 306, the verifier system determines that the mobile device can be used as an authentication factor based on the mobile device information. For example, the verifier system can compare the mobile device information to a list of authentication factor requirements.

At operation 308, the verifier system authenticates the digital travel document. For example, the verifier system verifies the authenticity of the document by verifying the digital signature of the identity data and confirming the signature is from a trusted issuer.

At operation 310, the verifier system retrieves biometric information (e.g., portrait, fingerprints) of the user from the digital travel document. For example, a user portrait may be stored in the digital travel document, which the verifier system retrieves.

At operation 312, the verifier system registers the mobile device as an authentication factor with the retrieved biometric information of the user. For example, the registration may include control data (e.g., key, unique code) for identifying the mobile device. The registration may be stored in a database. The biometric information of the user may be linked with the control data of the mobile device in the database.

At operation 314, the verifier system transmits the control data to the mobile device for the mobile device to store. The mobile device receives the control data before the user reaches the checkpoint in country B. If the verifier system could not verify that the mobile device can be used as an authentication factor or could not authenticate the digital travel document, the verifier system can send an alert to the mobile device indicating that online authentication has failed.

At operation 316, the verifier system may transmit the registration of the mobile device to the checkpoint or a location accessible to the checkpoint. The registration may include the control data for the mobile device and the biometric information of the user as a database record. In some examples, the registration may be stored at a storage location in a network (e.g., cloud storage), and the checkpoint may be provided authorization to access the storage location. In some examples, the registration may be stored locally at the checkpoint with other registration records in a local database.

At operation 318, when the user arrives at the checkpoint, the checkpoint may authenticate the mobile device based on the control data for the mobile device. The mobile device may transmit the control data stored therein that was received from the verifier system to the checkpoint using wireless communication techniques, as described in further detail below. The checkpoint may then compare the received control data to stored registration records to match the received control data.

At operation 320, the checkpoint may verify the user based on biometric information. Biometric information (e.g., picture, fingerprint) of the user is taken at the checkpoint and compared to stored registration records. A 1: 1 matching technique can be used based on the earlier match of the mobile device using the control data. The registration record of the mobile data is linked to the biometric information for the user in the database record; therefore, the checkpoint can retrieve the registration record based on the match of the control data and then compare the biometric information taken of the user at the checkpoint to the biometric information stored in the retrieved registration record. The 1:1 matching technique can provide further efficiencies and improve accuracy of biometric matching.

At operation 322, the user is allowed to leave the checkpoint. If the checkpoint could not authenticate the mobile device or verify the user identity using the biometric information, the user may be routed to, for example, a border control agent for manual processing.

Although the flowchart of FIG. 3 illustrates an example method as comprising sequential steps or a process as having a particular order of operations, many of the steps or operations in the flowchart can be performed in parallel or concurrently, and the flowchart should be read in the context of the various embodiments of the present disclosure. The order of the method steps or process operations illustrated in FIG. 3 may be rearranged for some embodiments. Similarly, the method illustrated in FIG. 3 could have additional steps or operations not included therein or fewer steps or operations than those shown.

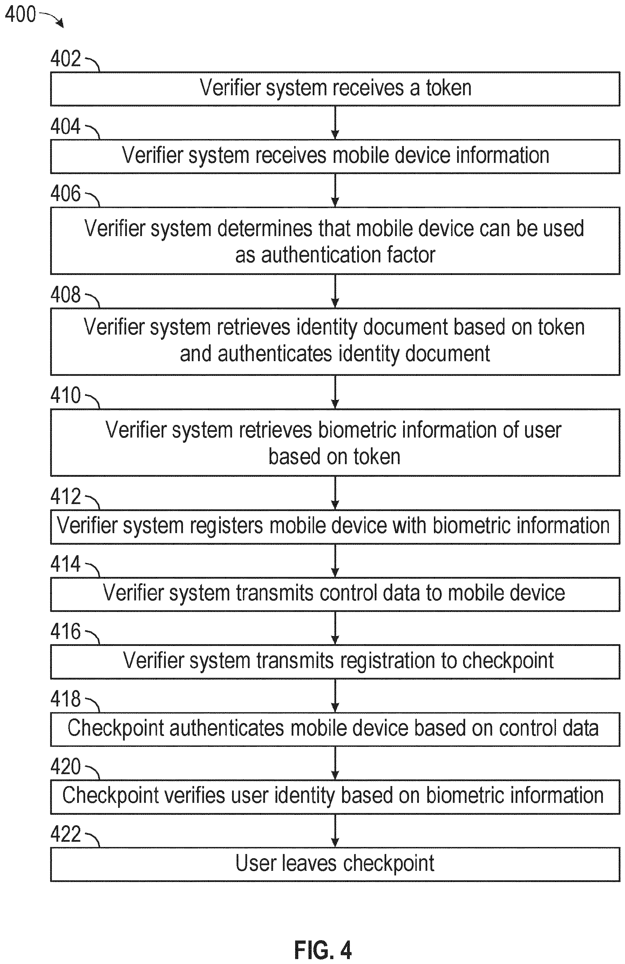

FIG. 4 is a flow diagram for a method 400 for authenticating a user, for example, crossing a border with a token-based travel document. In some examples, the method 400 can be executed using components of authentication system 200 described above with reference to FIG. 2. In this example, a user is traveling from country A (e.g., a first jurisdiction) to country B (e.g., a second jurisdiction) with a checkpoint in country B. At operation 402, a verifier system receives a token transmitted over the internet from a mobile device before the user reaches the checkpoint in country B. The token may be encrypted. The token may include a unique string value that is a pointer to where corresponding identity document information for the user is stored. For example, the token may contain information to perform Basic Access Control (BAC) or Supplemental Access Control (SAC) to DTC and eMTRD (Machine Readable Travel Documents) and may even contain information for both kind of documents. For example, the token may contain a Biometric Revokable Reference (BRR) that allows to retrieve the key for BAC or SAC to DTC and eMTRD. For example, the mobile phone may transmit the token before or after the user checks in to their flight in country A. In another example, the mobile phone may transmit the token after the user arrives in country B but before the user reaches the checkpoint.

At operation 404, the verifier system also receives information regarding the mobile device that transmitted the token. The mobile device information can include information about the manufacturer, model, operating system version, and/or related security applications, etc.

At operation 406, the verifier system determines that the mobile device can be used as an authentication factor based on the mobile device information. For example, the verifier system can compare the mobile device information to a list of authentication factor requirements.

At operation 408, the verifier system retrieves the identity document of the user based on the token and authenticates the identity document. For example, the token may include a link to a storage location maintained by an issuer of the token. The storage location may include the identity document.

At operation 410, the verifier system retrieves biometric information (e.g., portrait, fingerprints) of the user based on the token. For example, a user portrait may be stored in the storage location linked to the token, which the verifier system retrieves.

At operation 412, the verifier system registers the mobile device as an authentication factor with the retrieved biometric information of the user. For example, the registration may include control data (e.g., key, unique code) for identifying the mobile device. The registration may be stored in a database. The biometric information of the user may be linked with the control data of the mobile device in the database.

At operation 414, the verifier system transmits the control data to the mobile device for the mobile device to store. The mobile device receives the control data before the user reaches the checkpoint in country B. If the verifier system could not verify that the mobile device can be used as an authentication factor or could not authenticate the digital travel document, the verifier system can send an alert to the mobile device indicating that online authentication has failed.

At operation 416, the verifier system may transmit the registration of the mobile device to the checkpoint or a location accessible to the checkpoint. The registration may include the control data for the mobile device and the biometric information of the user as a database record. In some examples, the registration may be stored at a storage location in a network (e.g., cloud storage), and the checkpoint may be provided authorization to access the storage location. In some examples, the registration may be stored locally at the checkpoint with other registration records in a local database.

At operation 418, when the user arrives at the checkpoint, the checkpoint may authenticate the mobile device based on the control data for the mobile device. The mobile device may transmit the control data stored therein that was received from the verifier system to the checkpoint using wireless communication techniques, as described in further detail below. The checkpoint may then compare the received control data to stored registration records to match the received control data.

At operation 420, the checkpoint may verify the user based on biometric information. Biometric information (e.g., picture, fingerprint) of the user is taken at the checkpoint and compared to stored registration records. A 1: 1 matching technique can be used based on the earlier match of the mobile device using the control data. The registration record of the mobile data is linked to the biometric information for the user in the database record; therefore, the checkpoint can retrieve the registration record based on the match of the control data and then compare the biometric information taken of the user at the checkpoint to the biometric information stored in the retrieved registration record. The 1:1 matching technique can provide further efficiencies and improve accuracy of biometric matching.

At operation 422, the user is allowed to leave the checkpoint. If the checkpoint could not authenticate the mobile device or verify the user identity using the biometric information, the user may be routed to, for example, a border control agent for manual processing.

Although the flowchart of FIG. 4 illustrates an example method as comprising sequential steps or a process as having a particular order of operations, many of the steps or operations in the flowchart can be performed in parallel or concurrently, and the flowchart should be read in the context of the various embodiments of the present disclosure. The order of the method steps or process operations illustrated in FIG. 4 may be rearranged for some embodiments. Similarly, the method illustrated in FIG. 4 could have additional steps or operations not included therein or fewer steps or operations than those shown.

As mentioned above, the control data transmitted to the mobile device can include biometric template information, such as a BRR. In these examples, the biometric information is stored on the mobile device rather than in the verifier system or checkpoint. Here, the mobile device transmits identify document information to the verifier system as described above. The verifier system can authenticate the mobile device (e.g., determine that mobile device can be used as an authentication factor) and retrieve biometric information (e.g., biometric template) associated with the user, as described above. The verifier system can generate a BRR based on the retrieved biometric information. The BRR may be include a unique key token encrypted using the biometric information. The BRR may be transmitted to the mobile device as part of the control data.

At the checkpoint, the mobile device may then transmit the control data including the BRR to the checkpoint system. The mobile device can authenticate the mobile device as described above. Also, the checkpoint may capture biometric information (e.g., picture, fingerprint) of the user present at the checkpoint and run the capture and the BRR through the matching engine at the checkpoint. For example, the checkpoint can process the captured biometric information using the BRR to retrieve a "secret," such as the unique key token. The "secret" is retrieved when the captured biometric information matches within a certain degree to the biometric information used to generate the BRR. To retrieve the "secret," the checkpoint can use error code correction to mitigate the effects of slight variations in biometric captured information. The checkpoint therefore can perform a biometric match without storing biometric information in a database associated with the verifier system or checkpoint. Hence, in these examples, to maintain privacy concerns of the users and/or privacy regulations, biometric information may not be stored in outside databases.

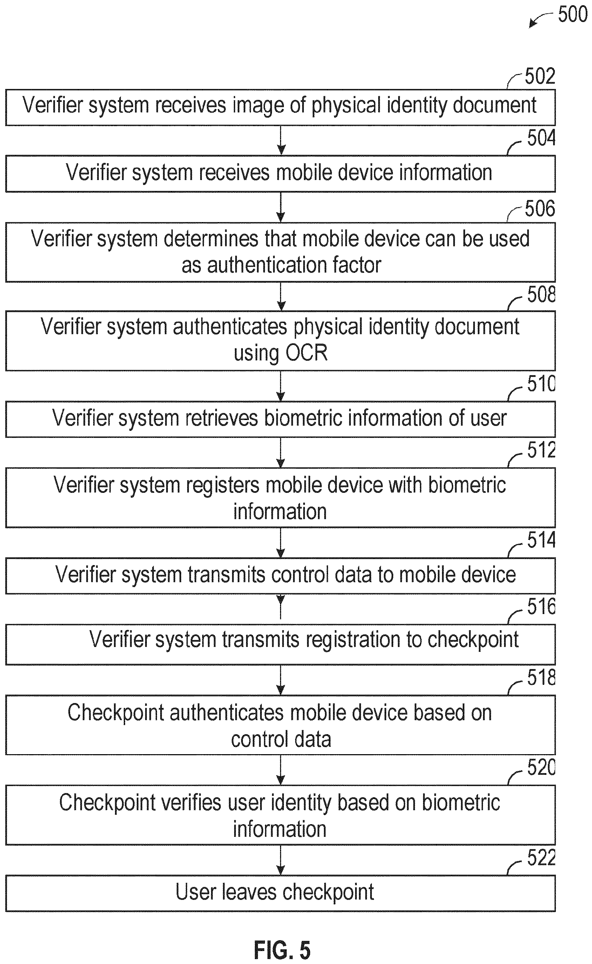

FIG. 5 is a flow diagram for a method 500 for authenticating a user, for example, crossing a border with a physical identity document. In some examples, the method 500 can be executed using components of authentication system 200 described above with reference to FIG. 2. In this example, a user is traveling from country A (e.g., a first jurisdiction) to country B (e.g., a second jurisdiction) with a checkpoint in country B. At operation 502, a verifier system receives an image of a physical identity document (e.g., physical passport) transmitted over the internet from a mobile device before the user reaches the checkpoint in country B. For example, the user may capture an image of the physical travel document using a camera integrated into the mobile device and may transmit the image of the physical travel document before the user reaches the checkpoint. For example, the mobile phone may transmit the token before or after the user checks in to their flight in country A. In another example, the mobile phone may transmit the token after the user arrives in country B but before the user reaches the checkpoint.

At operation 504, the verifier system also receives information regarding the mobile device that transmitted the token. The mobile device information can include information about the manufacturer, model, operating system version, and/or related security applications, etc.

At operation 506, the verifier system determines that the mobile device can be used as an authentication factor based on the mobile device information. For example, the verifier system can compare the mobile device information to a list of authentication factor requirements.

At operation 508, the verifier system authenticates the identity document. The verifier system may use optical character recognition (OCR) techniques to extract relevant information from the image to perform the authentication of the identity document. For example, the extracted text may be used to check over issuer information. For example, the document can be analyzed to make sure the information is at the right place, in the right proportion and including specified physical security features.

At operation 510, the verifier system retrieves biometric information (e.g., portrait, fingerprints) of the user based on the image of the identity document. In some examples, the verifier system may extract the biometric information (e.g., portrait) of the user in the image of the identity document. However, in some cases, the extracted biometric information may be low resolution and cannot be used to reliably perform a biometric check. Hence, in some examples, the verifier system may communicate with an external system, such as the issuer of the identity document, and retrieve a higher resolution file of the biometric information (e.g., portrait). For example, when a picture of the identity document is not of sufficient quality, the verifier system can retrieve a better-quality picture of the identity document from the external system.

At operation 512, the verifier system registers the mobile device as an authentication factor with the retrieved biometric information of the user. For example, the registration may include control data (e.g., key, unique code) for identifying the mobile device. The registration may be stored in a database. The biometric information of the user may be linked with the control data of the mobile device in the database.

At operation 514, the verifier system transmits the control data to the mobile device for the mobile device to store. The mobile device receives the control data before the user reaches the checkpoint in country B. If the verifier system could not verify that the mobile device can be used as an authentication factor or could not authenticate the digital travel document, the verifier system can send an alert to the mobile device indicating that online authentication has failed.

At operation 516, the verifier system may transmit the registration of the mobile device to the checkpoint or a location accessible to the checkpoint. The registration may include the control data for the mobile device and the biometric information of the user as a database record. In some examples, the registration may be stored at a storage location in a network (e.g., cloud storage), and the checkpoint may be provided authorization to access the storage location. In some examples, the registration may be stored locally at the checkpoint with other registration records in a local database.

At operation 518, when the user arrives at the checkpoint, the checkpoint may authenticate the mobile device based on the control data for the mobile device. The mobile device may transmit the control data stored therein that was received from the verifier system to the checkpoint using wireless communication techniques, as described in further detail below. The checkpoint may then compare the received control data to stored registration records to match the received control data.

At operation 520, the checkpoint may verify the user based on biometric information. Biometric information (e.g., picture, fingerprint) of the user is taken at the checkpoint and compared to stored registration records. A 1: 1 matching technique can be used based on the earlier match of the mobile device using the control data. The registration record of the mobile data is linked to the biometric information for the user in the database record; therefore, the checkpoint can retrieve the registration record based on the match of the control data and then compare the biometric information taken of the user at the checkpoint to the biometric information stored in the retrieved registration record. The 1:1 matching technique can provide further efficiencies and improve accuracy of biometric matching.

At operation 522, the user is allowed to leave the checkpoint. If the checkpoint could not authenticate the mobile device or verify the user identity using the biometric information, the user may be routed to, for example, a border control agent for manual processing.

Although the flowchart of FIG. 5 illustrates an example method as comprising sequential steps or a process as having a particular order of operations, many of the steps or operations in the flowchart can be performed in parallel or concurrently, and the flowchart should be read in the context of the various embodiments of the present disclosure. The order of the method steps or process operations illustrated in FIG. 5 may be rearranged for some embodiments. Similarly, the method illustrated in FIG. 5 could have additional steps or operations not included therein or fewer steps or operations than those shown.

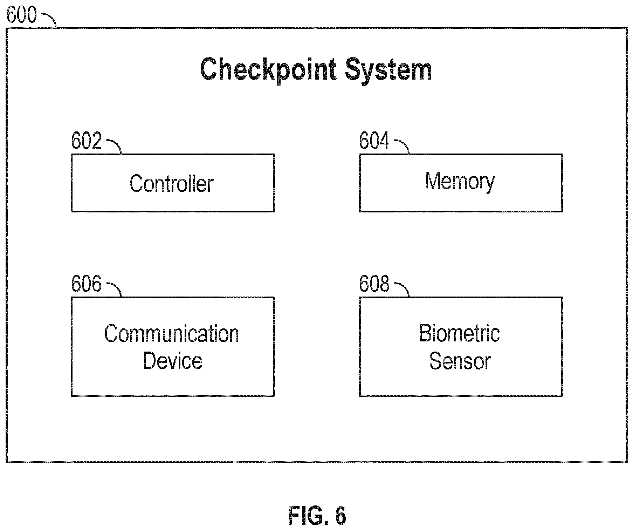

FIG. 6 illustrates example portions of a checkpoint system 600. As described above, the checkpoint system 600 may authenticate a mobile device and identity for respective users. The checkpoint system 600 may be communicatively coupled to a verifier system to receive registration records of respective users. The checkpoint system 600 may include a controller 602, a memory 604, a communication device 606, and a biometric sensor 608. The controller 602 may be provided as one or more microprocessors with single or multiple cores. The memory 604 may include ROM, RAM, SRAM, flash memory, and/or other suitable memory components. In some examples, the memory 604 may store a database of registration records to match mobile devices and users as users arrive at the checkpoint system 600.

The communication device 606 may include radio frequency components such as baluns, amplifiers, upconverters, downconverters, etc., to transmit and receive wireless communication signals. The communication device 606 is configured to communicate with mobile devices. In some examples, the communication device 606 is configured to operate near field communication (NFC) protocols to communicate with mobile devices. In some examples, the communication device 606 is configured to operate short range communication protocols, such as Bluetooth, Wifi, etc., to communicate with mobile devices. In some examples, the communication device 606 is configured to operate ultra-wideband (UWB) protocols to communicate with mobile devices. UWB protocols may allow the checkpoint to communicate with mobile devices to authenticate the mobile devices without the users having to stop at the checkpoint system 600.

The biometric sensor 608 senses biometric features of users at the checkpoint system 600. In some examples, the biometric sensor 608 may include a camera to capture an image of users to compare to stored portraits in registration records. In some examples, the biometric sensor 608 may include other types of sensors, such as a fingerprint sensor.

In some examples, a single mobile device may be used for a plurality of users, e.g., a family. The mobile device can be used as an authentication factor for the plurality of specified users. Control data for the mobile device may be associated with the biometric information of the each of the different users in the respective registration records. In some examples, the checkpoint may authenticate the mobile device first using the control data, and then retrieve the biometric information of the different users (e.g., family) associated with the control data for the mobile device. The checkpoint may then compare the collected biometric information of a given user to the plurality of biometric information samples. This technique still employs 1 : few matching technique as compared to a 1:many matching technique, leading to faster and more accurate processing.

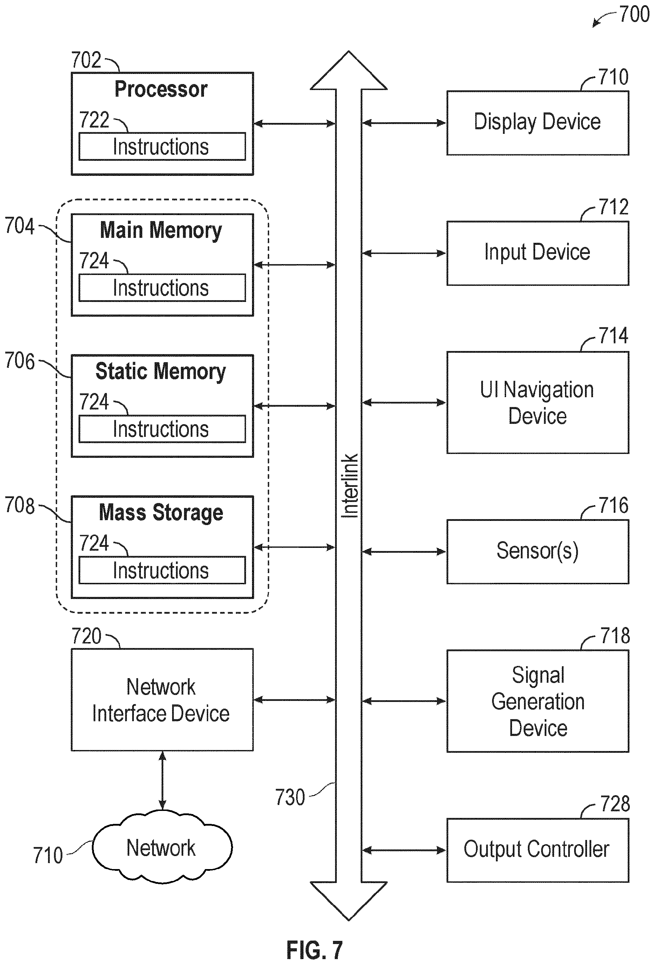

FIG. 7 illustrates a block diagram schematic of various example components of an example machine 700 that can be used as, for example, a verifier system 204 and checkpoint 208. Examples, as described herein, can include, or can operate by, logic or a number of components, modules, or mechanisms in machine 700. Modules may be hardware, software, or firmware communicatively coupled to one or more processors in order to carry out the operations described herein. Generally, circuitry (e.g., processing circuitry) is a collection of circuits implemented in tangible entities of machine 700 that include hardware (e.g., simple circuits, gates, logic, etc.). Circuitry membership can be flexible over time. Circuitries include members that can, alone or in combination, perform specified operations when operating. In some examples, hardware of the circuitry can be immutably designed to carry out a specific operation (e.g., hardwired). In some examples, the hardware of the circuitry can include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions permit embedded hardware (e.g., the execution units or a loading mechanism) to create members of the circuitry in hardware via the variable connections to carry out portions of the specific operation when in operation. Accordingly, in some examples, the machine readable medium elements are part of the circuitry or are communicatively coupled to the other components of the circuitry when the device is operating. In some examples, any of the physical components can be used in more than one member of more than one circuitry. For example, under operation, execution units can be used in a first circuit of a first circuitry at one point in time and reused by a second circuit in the first circuitry, or by a third circuit in a second circuitry at a different time. Additional and/or more specific examples of components with respect to machine 700 follow.

In some embodiments, machine 700 can operate as a standalone device or can be connected (e.g., networked) to other machines. In a networked deployment, machine 700 can operate in the capacity of a server machine, a client machine, or both in server-client network environments. In some examples, machine 700 can act as a peer machine in a peer-to-peer (P2P) (or other distributed) network environment. Machine 700 can be or include a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 700 can include a hardware processor 702 (e.g., a central processing unit (CPU), a graphics processing unit (GPU), a hardware processor core, or any combination thereof) and a main memory 704, a static memory (e.g., memory or storage for firmware, microcode, a basic-input-output (BIOS), unified extensible firmware interface (UEFI), etc.) 706, and/or mass storage 708 (e.g., hard drives, tape drives, flash storage, or other block devices) some or all of which can communicate with each other via an interlink (e.g., bus) 730. Machine 700 can further include a display device 710 and an input device 712 and/or a user interface (UI) navigation device 714. Example input devices and UI navigation devices include, without limitation, one or more buttons, a keyboard, a touch-sensitive surface, a stylus, a camera, a microphone, etc.). In some examples, one or more of the display device 710, input device 712, and UI navigation device 714 can be a combined unit, such as a touch screen display. Machine 700 can additionally include a signal generation device 718 (e.g., a speaker), a network interface device 720, and one or more sensors 716, such as a global positioning system (GPS) sensor, compass, accelerometer, or other sensor. Machine 700 can include an output controller 728, such as a serial (e.g., universal serial bus (USB), parallel, or other wired or wireless (e.g., infrared (IR), NFC, etc.) connection to communicate or control one or more peripheral devices (e.g., a printer, card reader, etc.).

Processor 702 can correspond to one or more computer processing devices or resources. For instance, processor 702 can be provided as silicon, as a Field Programmable Gate Array (FPGA), an Application-Specific Integrated Circuit (ASIC), any other type of Integrated Circuit (IC) chip, a collection of IC chips, or the like. As a more specific example, processor 702 can be provided as a microprocessor, Central Processing Unit (CPU), or plurality of microprocessors or CPUs that are configured to execute instructions sets stored in an internal memory 722 and/or memory 704, 706, 708.

Any of memory 704, 706, and 708 can be used in connection with the execution of application programming or instructions by processor 702 for performing any of the functionality or methods described herein, and for the temporary or long-term storage of program instructions or instruction sets 724 and/or other data for performing any of the functionality or methods described herein. Any of memory 704, 706, 708 can comprise a computer readable medium that can be any medium that can contain, store, communicate, or transport data, program code, or instructions 724 for use by or in connection with machine 700. The computer readable medium can be, for example but is not limited to, an electronic, magnetic, optical, electromagnetic, infrared, or semiconductor system, apparatus, or device. More specific examples of suitable computer readable medium include, but are not limited to, an electrical connection having one or more wires or a tangible storage medium such as a portable computer diskette, a hard disk, a random access memory (RAM), a read-only memory (ROM), an erasable programmable read-only memory (EPROM or EEPROM), Dynamic RAM (DRAM), a solid-state storage device, in general, a compact disc read-only memory (CD-ROM), or other optical or magnetic storage device. As noted above, computer-readable media includes, but is not to be confused with, computer-readable storage medium, which is intended to cover all physical, non-transitory, or similar embodiments of computer-readable media.

Network interface device 720 includes hardware to facilitate communications with other devices over a communication network, such as the one or more networks described above, utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, wireless data networks (e.g., networks based on the IEEE 802.11 family of standards known as Wi-Fi or the IEEE 802.16 family of standards known as WiMax), networks based on the IEEE 802.15.4 family of standards, and peer-to-peer (P2P) networks, among others. In some examples, network interface device 720 can include an Ethernet port or other physical jack, a Wi-Fi card, a Network Interface Card (NIC), a cellular interface (e.g., antenna, filters, and associated circuitry), or the like. In some examples, network interface device 720 can include one or more antennas to wirelessly communicate using at least one of single-input multiple-output (SIMO), multiple-input multiple-output (MIMO), or multiple-input single-output (MISO) techniques.

### Additional Examples

Example 1. A method comprising: receiving, from a mobile device, identity document information over a network before a user reaches a checkpoint; receiving, from the mobile device, mobile device information over the network; confirming authenticity of the identity document information; retrieving biometric information associated with the user based on the identity document information; registering the mobile device as an authentication factor; transmitting control data to the mobile device, wherein the mobile device is configured to store the control data; and making the registration record accessible to the checkpoint, wherein the checkpoint is configured to authenticate the mobile device based on the control data and verify identity of the user based on the biometric information.

Example 2. The method of example 1, further comprising: receiving, by the checkpoint, the control data from the mobile device; authenticating the mobile device based on comparing the received control data from the mobile device and the stored control data in the registration record; collecting, by the checkpoint, biometric information from the user; and verifying identify of the user based on comparing the collected biometric information and stored biometric information.

Example 3. The method of any of examples 1-2, wherein: the step of collecting comprises extracting, by the checkpoint, the stored biometric information from the registration record based on authenticating the mobile device; and the step of verifying comprises matching the extracted biometric information with the collected biometric information using a 1:1 matching technique.

Example 4. The method of any of examples 1-3, wherein the identity document information includes a digital travel document.

Example 5. The method of any of examples 1-4, wherein the identity document information includes a token and the token is used to retrieve an identity document from a network storage location.

Example 6. The method of any of examples 1-5, wherein the identity document information includes an image of a physical identity document.

Example 7. The method of any of examples 1-6, wherein the biometric information is retrieved from a network storage location based on information in the image of the physical identity document.

Example 8. The method of any of examples 1-7, further comprising: generating a biometric revocable reference (BRR) based on the retrieved biometric information, wherein the control data includes the BRR.

Example 9. The method of any of examples 1-8, wherein the checkpoint is configured to perform a biometric match to verify identify of the user based on the BRR received from the mobile device.

Example 10. A system comprising: one or more processors of a machine; and a memory storing instructions that, when executed by the one or more processors, cause the machine to perform operations implementing any one of example methods 1 to 9.

Example 11. A machine-readable storage device embodying instructions that, when executed by a machine, cause the machine to perform operations implementing any one of example methods 1 to 9.

### Additional Notes

The above detailed description includes references to the accompanying drawings, which form a part of the detailed description. The drawings show, by way of illustration, specific embodiments that can be practiced. These embodiments may also be referred to herein as "examples." Such embodiments or examples can include elements in addition to those shown or described. However, the present inventor also contemplates examples in which only those elements shown or described are provided. Moreover, the present inventor also contemplates examples using any combination or permutation of those elements shown or described (or one or more aspects thereof), either with respect to a particular example (or one or more aspects thereof), or with respect to other examples (or one or more aspects thereof) shown or described herein. That is, the above-described embodiments or examples or one or more aspects, features, or elements thereof can be used in combination with each other.

As will be appreciated by one of skill in the art, the various embodiments of the present disclosure may be embodied as a method (including, for example, a computer-implemented process, a business process, and/or any other process), apparatus (including, for example, a system, machine, device, computer program product, and/or the like), or a combination of the foregoing. Accordingly, embodiments of the present disclosure or portions thereof may take the form of an entirely hardware embodiment, an entirely software embodiment (including firmware, middleware, microcode, hardware description languages, etc.), or an embodiment combining software and hardware aspects. Furthermore, embodiments of the present disclosure may take the form of a computer program product on a computer-readable medium or computer-readable storage medium, having computer-executable program code embodied in the medium, that define processes or methods described herein. A processor or processors may perform the necessary tasks defined by the computer-executable program code. In the context of this disclosure, a computer readable medium may be any medium that can contain, store, communicate, or transport the program for use by or in connection with the systems disclosed herein. As indicated above, the computer readable medium may be, for example but is not limited to, an electronic, magnetic, optical, electromagnetic, infrared, or semiconductor system, apparatus, or device. More specific examples of suitable computer readable medium include, but are not limited to, an electrical connection having one or more wires or a tangible storage medium such as a portable computer diskette, a hard disk, a random access memory (RAM), a read-only memory (ROM), an erasable programmable read-only memory (EPROM or EEPROM), a compact disc read-only memory (CD-ROM), or other optical, magnetic, or solid state storage device. As noted above, computer-readable media includes, but is not to be confused with, computer-readable storage medium, which is intended to cover all physical, non-transitory, or similar embodiments of computer-readable media.

As used herein, the terms "substantially" or "generally" refer to the complete or nearly complete extent or degree of an action, characteristic, property, state, structure, item, or result. For example, an object that is "substantially" or "generally" enclosed would mean that the object is either completely enclosed or nearly completely enclosed. The exact allowable degree of deviation from absolute completeness may in some cases depend on the specific context. However, generally speaking, the nearness of completion will be so as to have generally the same overall result as if absolute and total completion were obtained. The use of "substantially" or "generally" is equally applicable when used in a negative connotation to refer to the complete or near complete lack of an action, characteristic, property, state, structure, item, or result. For example, an element, combination, embodiment, or composition that is "substantially free of" or "generally free of" an element may still actually contain such element as long as there is generally no significant effect thereof.

In the foregoing description various embodiments of the present disclosure have been presented for the purpose of illustration and description. They are not intended to be exhaustive or to limit the invention to the precise form disclosed. Obvious modifications or variations are possible in light of the above teachings. The various embodiments were chosen and described to provide the best illustration of the principals of the disclosure and their practical application, and to enable one of ordinary skill in the art to utilize the various embodiments with various modifications as are suited to the particular use contemplated. All such modifications and variations are within the scope of the present disclosure as determined by the appended claims when interpreted in accordance with the breadth they are fairly, legally, and equitably entitled.

## Claims

1. A method comprising:
receiving, from a mobile device, identity document information over a network before a user reaches a checkpoint;
receiving, from the mobile device, mobile device information over the network;
confirming authenticity of the identity document information;
retrieving biometric information associated with the user based on the identity document information;
registering the mobile device as an authentication factor;
transmitting control data to the mobile device, wherein the mobile device is configured to store the control data; and
making the registration record accessible to the checkpoint, wherein the checkpoint is configured to authenticate the mobile device based on the control data and verify identity of the user based on the biometric information.

2. The method of claim 1, further comprising:
receiving, by the checkpoint, the control data from the mobile device;
authenticating the mobile device based on comparing the received control data from the mobile device and the stored control data in the registration record;
collecting, by the checkpoint, biometric information from the user; and
verifying identify of the user based on comparing the collected biometric information and stored biometric information.

3. The method of claim 2, wherein:
the step of collecting comprises extracting, by the checkpoint, the stored biometric information from the registration record based on authenticating the mobile device; and
the step of verifying comprises matching the extracted biometric information with the collected biometric information using a 1:1 matching technique.

4. The method of claim 1, wherein the identity document information includes a digital travel document.

5. The method of claim 1, wherein the identity document information includes a token and the token is used to retrieve an identity document from a network storage location.

6. The method of claim 1, wherein the identity document information includes an image of a physical identity document.

7. The method of claim 6, wherein the biometric information is retrieved from a network storage location based on information in the image of the physical identity document.

8. The method of claim 1, further comprising:
generating a biometric revocable reference (BRR) based on the retrieved biometric information, wherein the control data includes the BRR.

9. The method of claim 8, wherein the checkpoint is configured to perform a biometric match to verify identify of the user based on the BRR received from the mobile device.

10. An authentication system comprising:
a verifier system communicatively couplable to a mobile device and a checkpoint, the verifier system comprising:
at least one hardware processor; and
at least one memory storing instructions that, when executed by the at least one hardware processor, cause the at least one hardware processor to perform operations comprising:
receiving, from the mobile device, identity document information over a network before a user reaches the checkpoint;
receiving, from the mobile device, mobile device information over the network;
confirming authenticity of the identity document information;
retrieving biometric information associated with the user based on the identity document information;
registering the mobile device as an authentication factor;
transmitting control data to the mobile device, wherein the mobile device is configured to store the control data; and
making the registration record accessible to the checkpoint, wherein the checkpoint is configured to authenticate the mobile device based on the control data and verify identity of the user based on the biometric information.

11. The authentication system of claim 10, further comprising:
the checkpoint including a controller configured to:
receiving the control data from the mobile device;
authenticating the mobile device based on comparing the received control data from the mobile device and the stored control data in the registration record;
collecting biometric information from the user; and
verifying identify of the user based on comparing the collected biometric information and stored biometric information.

12. The authentication system of claim 11, wherein:
the step of collecting comprises extracting, by the checkpoint, the stored biometric information from the registration record based on authenticating the mobile device; and
the step of verifying comprises matching the extracted biometric information with the collected biometric information using a 1:1 matching technique.

13. The authentication system of claim 10, wherein the identity document information includes a digital travel document.

14. The authentication system of claim 10, wherein the identity document information includes a token and the token is used to retrieve an identity document from a network storage location.

15. The authentication system of claim 10, wherein the identity document information includes an image of a physical identity document.

16. The authentication system of claim 15, wherein the biometric information is retrieved from a network storage location based on information in the image of the physical identity document.

17. The method of claim 10, the operations further comprising:
generating a biometric revocable reference (BRR) based on the retrieved biometric information, wherein the control data includes the BRR.

18. The authentication system of claim 17, wherein the checkpoint is configured to perform a biometric match to verify identify of the user based on the BRR received from the mobile device.

19. A machine readable medium embodying instructions that, when executed by a machine, cause the machine to perform the method of any of claims 1 to 9.
